# EUROPEAN PATENT SPECIFICATION

(11) **EP 2 595 301 B1**
(45) Date of publication and mention of the grant of the patent: **24.04.2019**
(21) Application number: 12187746.8
(22) Date of filing: 09.10.2012
(51) Int. Cl.: H02M 7/48, H02P 27/06

(54) **Control arrangement in a frequency converter**
Steuervorrichtung für Frequenzumrichter
Dispositif de command pour convertisseur de fréquence

(30) Priority: 17.11.2011 FI 20116145
(43) Date of publication of application: 22.05.2013
(73) Proprietor: Vacon Oy, 65380 Vaasa (FI)
(72) Inventor: Merilinna, Paavo, 33100 Tampere (FI)
(74) Representative: Heinänen Oy Patent Agency

(56) References cited:
- US-A- 4 575 668
- US-B1- 6 239 566

## Description

### Field of technology

The object of this invention is a control arrangement of a frequency converter. More particularly, the object of the invention is a method and an apparatus for controlling a frequency converter provided with two auxiliary voltage sources, as well as a frequency converter provided with two such apparatuses.

### Prior art

All devices that are based on power electronics, such as frequency converters, comprise a control unit that provides for the appropriate operation of the device. In order to operate, the control unit requires one or more operating voltages, e.g. 5 Vdc and 12 Vdc, which are formed in a so-called auxiliary voltage source. The input power of an auxiliary voltage source can come directly from the input voltage of the device or from some other source voltage to be connected to the device. For example, in frequency converters an auxiliary voltage source is generally supplied from the voltage of a so-called intermediate circuit, which voltage is formed by rectifying the input voltage. Depending on the power class, the actual power part, control unit and auxiliary voltage source can be separate or they can be e.g. disposed on the same card as an embedded system.

As is obvious to a person skilled in the art, is most advantageous technically and economically to dimension an auxiliary voltage source only for the power range and voltage range at which the device is intended to operate. For example in a frequency converter intended for input voltages of 400...500 Vac, an operating range of the intermediate circuit voltage of 300...1000 Vdc can be sufficient for an auxiliary voltage source, which voltage range is affected, apart from by input voltage tolerances, also by the requirements set by certain special situations known by a person skilled in the art, such as overvoltage protection of the power semiconductors.

In some operating sites of a frequency converter, the operating capability of the frequency converter also outside the normal input voltage range, although of course with limited performance, can be a requirement. For example, in the operating situation of a motor controlled with a frequency converter addressed by publication WO 2008/031915, control capability of the switches of the lower branch of an inverter is required even when the input voltage has been cut off. According to patent publication FI 121293, the problem is solved such that the frequency converter comprises two auxiliary voltage sources, the operating range of the first of which starts at a sufficiently low level for enabling the required control function. A similar solution can be found in US 6 239 566 B1. The solutions according to both publications have the drawback, however, that because the switches of only either the upper branch or the lower branch are controlled, the power semiconductor switches of the inverter are unevenly stressed, which in an extreme situation can result in component damage. In addition, the publications set a clear restriction to the motor type in connection with which the solutions according to the publications can be used.

Also known in the art are other operating situations of a motor controlled with a frequency converter wherein short-term operation at limited performance is desired when the power supply from the network has been disconnected. For this type of temporary operation, e.g. a battery can be provided as a source of operating power, the voltage of such a battery often being, however, below the normal operating range of an auxiliary voltage source of the frequency converter.

### Summary of the invention

The aim of this invention is to achieve a new type of arrangement for enabling the operation of a frequency converter in a wide voltage range, and more particularly at lower operating voltages than the normal input voltage level. The aim is achieved with a method and an apparatus, which are characterized by what is stated in the characterization parts of the independent claims. Other preferred embodiments of the invention are the objects of the dependent claims.

The frequency converter according to the invention is provided with two auxiliary voltage sources, the operating ranges of which differ from each other, and with two control units corresponding to them, both of which control units can form a three-phase voltage pulse pattern controlling the inverter.

The arrangement enables e.g. electric braking of a motor drive in an exceptional situation, in which the normal power supply of a frequency converter from an electricity distribution network is not working.

According to the invention the first auxiliary voltage source energizes to operate when the intermediate circuit voltage rises to a first level, which can be e.g. approx. 20 Vdc, and it supplies operating voltage at least to the first control unit and to the gate drivers controlling the power semiconductors of the inverter. The first control unit can be more limited in its performance capability than the second one, but according to the invention it is, however, able to form a three-phase voltage pulse pattern of controllable frequency, for controlling the inverter.

In addition, the frequency converter according to the invention comprises a second auxiliary voltage source and a second control unit. These are units that are intended to operate at the normal operating voltage level of the device and correspond therefore to an auxiliary voltage source and control unit of prior-art frequency converters. According to the invention when these are energized to operate, the operation of the first auxiliary voltage source can be stopped and the control signals formed by the first control unit can no longer be used for controlling the inverter.

According to the invention, when it is operating relying on the first auxiliary voltage source and control unit, the frequency converter can form an output voltage, by the aid of which for some mechanical reason, e.g. owing to a load pulled by gravity, the speed of rotation of the rotating electric motor can be limited or slowed by braking electrically. Owing to the three-phase output voltage the invention does not set the type of limitation to motor type as e.g. the solution according to publication WO 2008/031915, but instead it is suited for use with the most common motor type in industry, a squirrel-cage motor.

In addition, in a disconnection situation of the supply network, according to the invention by the action of the first auxiliary voltage source and the first control unit it is possible to control with limited power the load transported by the motor to the nearest safe stopping location, by connecting e.g. a battery to the intermediate circuit of the frequency converter as a temporary power source.

The arrangement according to the invention extends the opportunities for using a frequency converter in situations in which the normal power supply from an electricity network has been disconnected, By means of the invention it is possible to increase the operating safety of an apparatus by slowing down the speed of rotation of a motor that has started by itself to rotate, e.g. owing to a load, or by controlling the load to a safe stopping location.

### Short description of the drawings

In the following, the invention will be described in more detail by the aid some embodiments with reference to the attached drawings, wherein
Fig. 1 presents the main circuit of a frequency converter and a motor,
Fig. 2 presents an arrangement according to the invention for controlling a power component of an inverter,
Fig. 3 presents the operating ranges of the auxiliary voltage sources according to the invention, and
Fig. 4 presents the connection of a battery to the intermediate circuit of a frequency converter.

### Detailed description of the invention

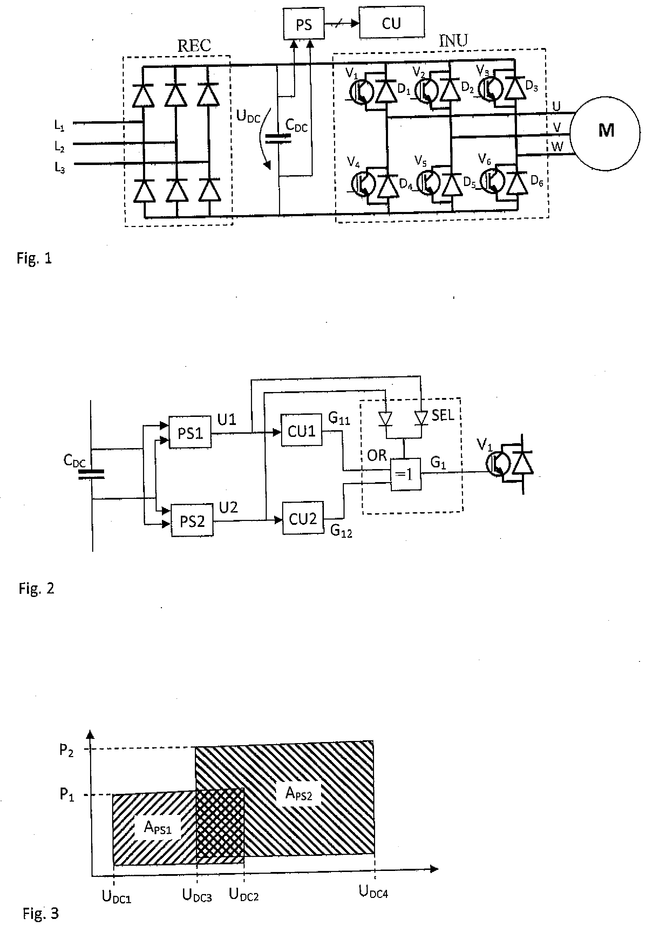

Fig. 1 presents an example of the main circuit of a normal three-phase PWM frequency converter, in which circuit a three-phase network bridge REC comprised of diodes rectifies the three-phase alternating voltage L₁, L₂, L₃ of the supply network into the direct-current voltage U_{DC} of the intermediate circuit, which direct-current voltage is filtered with a filtering capacitor C_{DC}, an inverter INU comprised of three phase switches implemented with power semiconductors, which inverter forms from the direct-current voltage of the intermediate circuit three-phase output voltage U, V, W for controlling the motor M. The term phase switch means components to be connected to the same output phase, which components can connect the output phase to any pole of the intermediate circuit whatsoever, e.g. with respect to the U-phase components V₁, V₄, D₁, D₄. In addition, the device comprises an auxiliary voltage source PS, which forms from direct-current voltage of the intermediate circuit the operating voltages needed, *inter alia,* for the fan cooling the device and for the control unit CU controlling the operation of the inverter. In modern frequency converters the power semiconductor components V₁...V₆ controlling the phase switches are most generally IGBT transistors according to the example of the figure, in parallel with which so-called zero diodes D₁...D₆ are connected. The inductive component normally used on either side of the network bridge for filtering the harmonics of the network current taken by the frequency converter has not been drawn in the figure as it is of no significance from the viewpoint of the present invention.

As is known in the art, a frequency converter can also be provided with a so-called active network bridge, of a type that enables supplying the braking power of the motor back into the supply network. The present invention does not set any limitations for the type of network bridge used.

Fig. 2 presents the parts connected to controlling the components of the phase switches of the invention. The figure is simplified in order to clarify the principle, it is obvious to the person skilled in the art that a practical embodiment will include a number of other components, which can be connected to configuring the voltage levels and power levels of signals, to the filtering of interference, *et cetera.*

According to the invention the frequency converter comprises two auxiliary voltage sources PS1 and PS2 forming operating voltages from the intermediate circuit, which sources form e.g. operating voltages U1 and U2 of a nominal 5 Vdc for, *inter alia,* the control units. Each auxiliary voltage source has its own corresponding control unit CU1 and CU2, which form control signals G₁₁, G₁₂, which are combined in the OR circuit into the final control signal G₁ of the power semiconductor (V₁) of the inverter. The OR logic means that if either input signal G₁₁, G₁₂ is active, the output signal G₁ is also active. The OR circuit receives its operating voltage via the diode selector SEL so that for forming the output signal it is sufficient if either one of the auxiliary voltage sources PS1, PS2 is in operation.

It must also be noted, although it is not presented in the figure, that correct logical operation of the control pulses also requires that only one control unit at a time forms control pulses. If, therefore, e.g. CU2 is active, it prevents signals coming from CU1, for preventing overlapping and possibly conflicting control pulses.

In Fig. 3 is an example of the operating ranges A_{PS1}, A_{PS2} of two auxiliary voltage sources according to the invention in a voltage-power graph. According to the example, the first auxiliary voltage source PS1 operates in the voltage range U_{DC1}...U_{DC2}, e.g. 20...400 Vdc, producing a maximum power of P₁, and correspondingly the second auxiliary voltage source PS2 in the range U_{DC3}...U_{DC4}, e.g. 300...1000 Vdc, at a maximum power of P₂. With this arrangement the frequency converter can thus form three-phase output voltage already with the 20 Vdc voltage of the intermediate circuit by the action of the first auxiliary voltage source and control unit. After the intermediate circuit voltage U_{DC} has risen above 300 Vdc, the second auxiliary voltage source PS2 starts up, in which case the control unit CU2 corresponding to it can take over the control of the frequency converter, at the same time stopping the operation of the first control unit CU1. The operation of the first auxiliary voltage source PS1 can be stopped after the second auxiliary voltage source has energized e.g. independently on the basis of the voltage level of the intermediate circuit or by the action of the control unit CU2. The maximum power of the first voltage source PS1 can be lower than that of the second e.g. because during the limited performance of the frequency converter the fan of the device also does not operate.

It should be noted that the present invention also enables the function presented in patent publication FI 121293 when the electric motor connected to the frequency converter rotates e.g. owing to a load. According to the invention the first auxiliary voltage source and control unit can energize at a low voltage and form a three-phase output voltage braking the motor, in which case the braking energy charges the voltage of the intermediate circuit up until the second auxiliary voltage source and the control unit corresponding to it energize to operate.

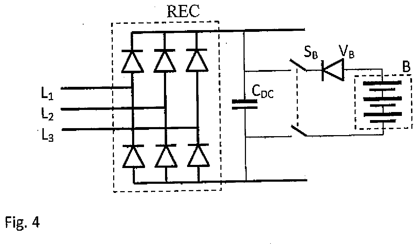

Fig. 4 contains an example of how a battery B can be connected to the intermediate circuit of a frequency converter for emergency situation operation. In the embodiment the connection occurs by the aid of a bipolar switch S_{B}, and the circuit also comprises a diode V_{B}, which prevents overcharging of the battery, if the supply network L₁, L₂, L₃ happens to be connected to the frequency converter simultaneously.

When the voltage of the battery is higher than the excitation voltage of the first auxiliary voltage source, the first control unit can control the inverter for forming three-phase output voltage, in which case it is possible to control with limited power the load transported by the motor to the nearest safe stopping location.

It is obvious to the person skilled in the art that the different embodiments of the invention are not limited solely to the example described above, but that they may be varied within the scope of the claims presented below.

## Claims

1. Method for controlling a frequency converter, the frequency converter comprises a rectifier (REC) connected to an input voltage, a three-phase inverter (INU) provided with controllable solid-state switches, an intermediate voltage circuit between the rectifier (REC) and the three-phase inverter (INU), and a control system,
the frequency converter controls the operation of an electric motor (M) connected to it, the method being **characterized in that**
providing two auxiliary voltage sources (PS1, PS2), operating in different voltage ranges, to be connected to the intermediate voltage circuit, to each of the auxiliary voltage sources an own control unit (CU1, CU2) is connected, both of the control units are able to form a three-phase control pulse pattern controlling the inverter (INU),
controlling the first auxiliary voltage source (PS1) to operate when the intermediate circuit voltage rises to a first level, and enabling the first auxiliary voltage source to supply operating voltage at least to the first control unit (CU1) and to the gate drivers controlling the power semiconductors of the inverter,
controlling the second auxiliary voltage source (PS2) to operate when the intermediate circuit voltage rises to a second level, and enabling the second auxiliary voltage source to supply operating voltage at least to the second control unit (CU2) and to the gate drivers controlling the power semiconductors of the inverter, and
wherein when the second control unit energizes to operate, the using of the control signals formed by the first control unit for controlling the power semiconductors of the inverter is prevented.

2. Method according to claim 1,
**characterized in that** the operating voltage ranges of the first and of the second auxiliary voltage source are overlapping.

3. Method according to any of the preceding claims,
**characterized in that**
when it operates by the aid of the first auxiliary voltage source and control unit, the frequency converter forms output voltage, by the aid of which for some mechanical reason the speed of rotation of the rotating electric motor can be limited or slowed by braking electrically.

4. Method according to any of the preceding claims,
**characterized in that** when it operates by the aid of the first auxiliary voltage source and control unit, the frequency converter forms output voltage, by the aid of which in a disconnection situation of the supply network the load transported by the motor can be controlled with limited power to the nearest safe stopping location.

5. Method according to claim 3 or 4,
**characterized in that** a battery can be connected to the intermediate circuit as a temporary power source of the frequency converter.

6. Apparatus for controlling a frequency converter, the frequency converter comprises a rectifier (REC) connected to an input voltage, a three-phase inverter (INU) provided with controllable solid-state switches, an intermediate voltage circuit between the rectifier (REC) and the three-phase inverter (INU), and a control system,
the frequency converter is configured to control the operation of an electric motor (M) connected to it,
the frequency converter comprises two auxiliary voltage sources (PS1, PS2), operating in different voltage ranges and to be connected to the intermediate voltage circuit, to each of the auxiliary voltage sources an own control unit (CU1, CU2) is connected, both of the control units are able to form a three-phase control pulse pattern controlling the inverter (INU),
**characterized in that**
the first auxiliary voltage source (PS1) is configured to operate when the intermediate circuit voltage rises to a first level and to supply operating voltage at least to the first control unit (CU1) and to the gate drivers controlling the power semiconductors of the inverter,
and the second auxiliary voltage source (PS2) is configured to operate when the intermediate circuit voltage rises to a second level and to supply operating voltage at least to the second control unit (CU2) and to the gate drivers controlling the power semiconductors of the inverter, and
wherein the apparatus is configured to operate such that when the second control unit energizes to operate, the using of the control signals formed by the first control unit for controlling the power semiconductors of the inverter is prevented.

7. Apparatus according to claim 6,
**characterized in that** the operating voltage ranges of the first and of the second auxiliary voltage source are overlapping.

8. Apparatus according to claim 6 or 7,
**characterized in that** the first auxiliary voltage source is smaller in power than the second auxiliary voltage source such that when the first auxiliary voltage source is operating the cooling fan of the frequency converter does not rotate.

9. Apparatus according to any of claims 6,7 or 8,
**characterized in that**
the frequency converter comprises two auxiliary voltage sources (PS1, PS2), forming operating voltages from the intermediate circuit, which sources are configured to form operating voltages (U1, U2) for the control units,
wherein each auxiliary voltage source has its own corresponding control unit (CU1, CU2), which control units are configured to form control signals (G₁₁, G₁₂), which are configured to be combined in the OR circuit into the final control signals (G₁) of the power semiconductors (V₁) of the inverter.

10. Apparatus according to claim 9,
**characterized in that** the OR circuit is configured to receive its operating voltage via a diode selector (SEL) such that for forming the output signal it is sufficient if either one of the auxiliary voltage sources (PS1, PS2) is in operation.

11. Apparatus according to any of claims 6 - 10,
**characterized in that** when the nominal input voltage range of the frequency converter is 400 -500 Vac,
the second auxiliary voltage source is configured to operate at least in the voltage range 200 - 1100 Vdc, e.g. in the range 300 - 1000 Vdc, and
the first auxiliary voltage source is configured to operate at least in the voltage range 10 - 500 Vdc, e.g. in the range 20 - 400 Vdc.

12. Apparatus according to any of claims 6 - 11,
**characterized in that** a battery (B) can be connected by the aid of a switch to the intermediate voltage circuit of the frequency converter, for emergency situation operation.

13. Apparatus according to claim 12,
**characterized in that** the apparatus comprises a bipolar switch (S_{B}) for connecting a battery to the intermediate voltage circuit, and **in that** the apparatus comprises a diode (V_{B}), which prevents overcharging of the battery, if the supply network (L₁, L₂, L₃) is connected to the frequency converter simultaneously with the battery.

14. Frequency converter, comprising a rectifier (REC) connected to the input voltage, a three-phase inverter (INU) provided with controllable solid-state switches, an intermediate voltage circuit between these and also a control system,
**characterized in that** the frequency converter comprises at least an apparatus according to any of claims 6 - 13 for controlling it.

## Patentansprüche

1. Verfahren zur Steuerung eines Frequenzumrichters, wobei der Frequenzumrichter einen Gleichrichter (REC), der an einer Eingangsspannung angeschlossen ist, einen Dreiphasenwechselrichter (INU), der mit steuerbaren Festkörperschaltern versehen ist, einen Spannungszwischenkreis zwischen dem Gleichrichter (REC) und dem Dreiphasenwechselrichter (INU) und ein Steuersystem aufweist,
wobei der Frequenzumrichter den Betrieb eines Elektromotors (M), der mit ihm verbunden ist, steuert, wobei das Verfahren **gekennzeichnet ist durch**
Bereitstellen von zwei Hilfsspannungsquellen (PS1, PS2), die in unterschiedlichen Spannungsbereichen arbeiten, zur Verbindung mit dem Spannungszwischenkreis, wobei an jeder der Hilfsspannungsquellen eine eigene Steuereinheit (CU1, CU2) angeschlossen ist, wobei beide Steuereinheiten in der Lage sind, ein Dreiphasen-Steuerimpulsmuster zu bilden, das den Wechselrichter (INU) steuert,
Steuern der ersten Hilfsspannungsquelle (PS1) so, dass diese aktiv ist, wenn die Zwischenkreisspannung auf einen ersten Pegel steigt, und Ermöglichen, dass die erste Hilfsspannungsquelle eine Betriebsspannung mindestens für die erste Steuereinheit (CU1) und für die Gate-Treiber, die die Leistungshalbleiter des Wechselrichters steuern, bereitstellt,
Steuern der zweiten Hilfsspannungsquelle (PS2) so, dass diese aktiv ist, wenn die Zwischenkreisspannung auf einen zweiten Pegel steigt, und Ermöglichen, dass die zweite Hilfsspannungsquelle eine Betriebsspannung mindestens für die zweite Steuereinheit (CU2) und für die Gate-Treiber, die die Leistungshalbleiter des Wechselrichters steuern, bereitstellt, und
wobei, wenn sich die zweite Steuereinheit zum Betrieb einschaltet, die Verwendung der Steuersignale, die durch die erste Steuereinheit zum Steuern der Leistungshalbleiter des Wechselrichters gebildet werden, verhindert wird.

2. Verfahren nach Anspruch 1,
**dadurch gekennzeichnet, dass** sich die Betriebsspannungsbereiche von der ersten und von der zweiten Hilfsspannungsquelle überlappen.

3. Verfahren nach einem der vorhergehenden Ansprüche,
**dadurch gekennzeichnet, dass**
der Frequenzumrichter, wenn er mit Hilfe der ersten Hilfsspannungsquelle und Steuereinheit betrieben wird, eine Ausgangsspannung bildet, mit deren Hilfe die Drehzahl des sich drehenden Elektromotors aus einem mechanischen Grund begrenzt oder durch elektrisches Bremsen verlangsamt werden kann.

4. Verfahren nach einem der vorhergehenden Ansprüche, **dadurch gekennzeichnet, dass** der Frequenzumrichter, wenn er mit Hilfe der ersten Hilfsspannungsquelle und Steuereinheit betrieben wird, eine Ausgangsspannung bildet, mit deren Hilfe die durch den Motor transportierte Last, in einem Trennungszustand des Versorgungsnetzes, mit begrenzter Leistung bis zum nächsten sicheren Haltepunkt gesteuert werden kann.

5. Verfahren nach Anspruch 3 oder 4,
**dadurch gekennzeichnet, dass** eine Batterie als eine vorübergehende Energiequelle des Frequenzumrichters mit dem Zwischenkreis verbunden werden kann.

6. Vorrichtung zur Steuerung eines Frequenzumrichters, wobei der Frequenzumrichter einen Gleichrichter (REC), der an einer Eingangsspannung angeschlossen ist, einen Dreiphasenwechselrichter (INU), der mit steuerbaren Festkörperschaltern versehen ist, einen Spannungszwischenkreis zwischen dem Gleichrichter (REC) und dem Dreiphasenwechselrichter (INU) und ein Steuersystem aufweist,
wobei der Frequenzumrichter dafür ausgelegt ist, den Betrieb eines damit verbundenen Elektromotors (M) zu steuern,
wobei der Frequenzumrichter zwei Hilfsspannungsquellen (PS1, PS2), die in unterschiedlichen Spannungsbereichen arbeiten und zur Verbindung mit dem Spannungszwischenkreis dienen, aufweist, wobei an jeder der Hilfsspannungsquellen eine eigene Steuereinheit (CU1, CU2) angeschlossen ist, wobei beide Steuereinheiten in der Lage sind, ein Dreiphasen-Steuerimpulsmuster zu bilden, das den Wechselrichter (INU) steuert,
**dadurch gekennzeichnet, dass**
die erste Hilfsspannungsquelle (PS1) dafür ausgelegt ist, aktiv zu sein, wenn die Zwischenkreisspannung auf einen ersten Pegel steigt, und eine Betriebsspannung mindestens für die erste Steuereinheit (CU1) und für die Gate-Treiber, die die Leistungshalbleiter des Wechselrichters steuern, bereitzustellen,
und die zweite Hilfsspannungsquelle (PS2) dafür ausgelegt ist, aktiv zu sein, wenn die Zwischenkreisspannung auf einen zweiten Pegel steigt, und eine Betriebsspannung mindestens für die zweite Steuereinheit (CU2) und für die Gate-Treiber, die die Leistungshalbleiter des Wechselrichters steuern, bereitzustellen, und
wobei die Vorrichtung dafür ausgelegt ist, derart zu operieren, dass, wenn sich die zweite Steuereinheit zum Betrieb einschaltet, die Verwendung der Steuersignale, die durch die erste Steuereinheit zum Steuern der Leistungshalbleiter des Wechselrichters gebildet werden, verhindert wird.

7. Vorrichtung nach Anspruch 6,
**dadurch gekennzeichnet, dass** sich die Betriebsspannungsbereiche von der ersten und von der zweiten Hilfsspannungsquelle überlappen.

8. Vorrichtung nach Anspruch 6 oder 7,
**dadurch gekennzeichnet, dass** die erste Hilfsspannungsquelle eine geringere Leistung als die zweite Hilfsspannungsquelle aufweist, sodass sich, wenn die erste Hilfsspannungsquelle aktiv ist, der Kühlventilator des Frequenzumrichters nicht dreht.

9. Vorrichtung nach einem der Ansprüche 6, 7 oder 8,
**dadurch gekennzeichnet, dass**
der Frequenzumrichter zwei Hilfsspannungsquellen (PS1, PS2) aufweist, die Betriebsspannungen aus dem Zwischenkreis bilden, wobei die Quellen dafür ausgelegt sind, Betriebsspannungen (U1, U2) für die Steuereinheiten zu bilden,
wobei jede Hilfsspannungsquelle ihre eigene entsprechende Steuereinheit (CU1, CU2) aufweist, wobei die Steuereinheiten dafür ausgelegt sind, Steuersignale (G₁₁, G₁₂) zu bilden, die dafür ausgelegt sind, in der ODER-Schaltung zu den endgültigen Steuersignalen (G₁) der Leistungshalbleiter (V₁) des Wechselrichters kombiniert zu werden.

10. Vorrichtung nach Anspruch 9,
**dadurch gekennzeichnet, dass** die ODER-Schaltung dafür ausgelegt ist, ihre Betriebsspannung derart über einen Diodenselektor (SEL) zu erhalten, dass es zur Bildung des Ausgabesignals ausreichend ist, wenn eine der beiden Hilfsspannungsquellen (PS1, PS2) in Betrieb ist.

11. Vorrichtung nach einem der Ansprüche 6-10,
**dadurch gekennzeichnet, dass**, wenn der Eingangsspannungsnennbereich des Frequenzumrichters 400∼500 Vac beträgt,
die zweite Hilfsspannungsquelle dafür ausgelegt ist, mindestens in dem Spannungsbereich 200-1100 Vdc, z. B. im Bereich 300-1000 Vdc, zu arbeiten, und die erste Hilfsspannungsquelle dafür ausgelegt ist, mindestens in dem Spannungsbereich 10-500 Vdc, z. B. im Bereich 20-400 Vdc, zu arbeiten.

12. Vorrichtung nach einem der Ansprüche 6-11,
**dadurch gekennzeichnet, dass** eine Batterie (B) mit Hilfe eines Schalters für den Notfallbetrieb mit dem Spannungszwischenkreis des Frequenzumrichters verbunden werden kann.

13. Vorrichtung nach Anspruch 12,
**dadurch gekennzeichnet, dass** die Vorrichtung einen Bipolarschalter (S_{B}) zum Verbinden einer Batterie mit dem Spannungszwischenkreis aufweist, und dadurch, dass die Vorrichtung eine Diode (V_{B}) aufweist, die ein Überladen der Batterie verhindert, wenn das Versorgungsnetz (L₁, L₂, L₃) gleichzeitig mit der Batterie mit dem Frequenzumrichter verbunden ist.

14. Frequenzumrichter, aufweisend einen Gleichrichter (REC), der an die Eingangsspannung angeschlossen ist, einen Dreiphasenwechselrichter (INU), der mit steuerbaren Festkörperschaltern versehen ist, einen Spannungszwischenkreis zwischen diesen und außerdem ein Steuersystem,
**dadurch gekennzeichnet, dass** der Frequenzumrichter mindestens eine Vorrichtung nach einem der Ansprüche 6-13 zu dessen Steuerung aufweist.

## Revendications

1. Procédé de commande d'un convertisseur de fréquence, le convertisseur de fréquence comprend un redresseur (REC) connecté à une tension d'entrée, un onduleur triphasé (INU) doté de commutateurs à semi-conducteurs pouvant être commandés, un circuit de tension intermédiaire entre le redresseur (REC) et l'onduleur triphasé (INU), et un système de commande,
le convertisseur de fréquence commande le fonctionnement d'un moteur électrique (M) connecté à celui-ci, le procédé étant **caractérisé en ce que**
il fournit deux sources de tension auxiliaires (PS1, PS2), fonctionnant dans différentes plages de tension, à connecter au circuit de tension intermédiaire, à chacune des sources de tension auxiliaires une propre unité de commande (CU1, CU2) est connectée, les deux unités de commande peuvent former un motif d'impulsion de commande triphasée commandant l'onduleur (INU),
il commande la première source de tension auxiliaire (PS1) pour qu'elle fonctionne lorsque la tension de circuit intermédiaire monte à un premier niveau, et permet que la première source de tension auxiliaire alimente en tension de fonctionnement au moins la première unité de commande (CU1) et les pilotes de grille commandant les semi-conducteurs de puissance de l'onduleur,
il commande la seconde source de tension auxiliaire (PS2) pour qu'elle fonctionne lorsque la tension de circuit intermédiaire monte à un second niveau, et permet que la seconde source de tension auxiliaire alimente en tension de fonctionnement au moins la seconde unité de commande (CU2) et les pilotes de grille commandant les semi-conducteurs de puissance de l'onduleur, et
dans lequel, lorsque la seconde unité de commande se met sous tension pour fonctionner, l'utilisation des signaux de commande formés par la première unité de commande pour commander les semi-conducteurs de puissance de l'onduleur est évitée.

2. Procédé selon la revendication 1,
**caractérisé en ce que** les plages de tension de fonctionnement de la première et de la seconde source de tension auxiliaire se chevauchent.

3. Procédé selon l'une quelconque des revendications précédentes,
**caractérisé en ce que**
lorsqu'il fonctionne à l'aide de la première source de tension auxiliaire et de l'unité de commande, le convertisseur de puissance forme une tension de sortie, à l'aide de laquelle pour une raison mécanique la vitesse de rotation du moteur électrique tournant peut être limitée ou ralentie par freinage électrique.

4. Procédé selon l'une quelconque des revendications précédentes,
**caractérisé en ce que** lorsqu'il fonctionne à l'aide de la première source de tension auxiliaire et de l'unité de commande, le convertisseur de puissance forme une tension de sortie, à l'aide de laquelle, dans une situation de déconnexion du réseau d'alimentation, la charge transportée par le moteur peut être commandée avec une puissance limitée vers l'emplacement d'arrêt sûr le plus proche.

5. Procédé selon la revendication 3 ou 4,
**caractérisé en ce qu'**une batterie peut être connectée au circuit intermédiaire en tant que source d'alimentation temporaire du convertisseur de puissance.

6. Appareil de commande d'un convertisseur de fréquence, le convertisseur de fréquence comprenant un redresseur (REC) connecté à une tension d'entrée, un onduleur triphasé (INU) doté de commutateurs à semi-conducteurs pouvant être commandés, un circuit de tension intermédiaire entre le redresseur (REC) et l'onduleur triphasé (INU), et un système de commande,
le convertisseur de fréquence est conçu pour commander le fonctionnement d'un moteur électrique (M) connecté à celui-ci,
le convertisseur de fréquence comprend deux sources de tension auxiliaires (PS1, PS2), fonctionnant dans différentes plages de tension et à connecter au circuit de tension intermédiaire, à chacune des sources de tension auxiliaires une propre unité de commande (CU1, CU2) est connectée, les deux unités de commande peuvent former un motif d'impulsion de commande triphasée commandant l'onduleur (INU),
**caractérisé en ce que**
la première source de tension auxiliaire (PS1) est commandée pour fonctionner lorsque la tension de circuit intermédiaire monte à un premier niveau et pour alimenter en tension de fonctionnement au moins la première unité de commande (CU1) et les pilotes de grille commandant les semi-conducteurs de puissance de l'onduleur,
et la seconde source de tension auxiliaire (PS2) est conçue pour fonctionner lorsque la tension de circuit intermédiaire monte à un second niveau et pour alimenter en tension de fonctionnement au moins la seconde unité de commande (CU2) et les pilotes de grille commandant les semi-conducteurs de puissance de l'onduleur, et
dans lequel l'appareil est conçu pour fonctionner de sorte que, lorsque la seconde unité de commande se met sous tension pour fonctionner, l'utilisation des signaux de commande formés par la première unité de commande pour commander les semi-conducteurs de puissance de l'onduleur soit évitée.

7. Appareil selon la revendication 6,
**caractérisé en ce que** les plages de tension de fonctionnement de la première et de la seconde source de tension auxiliaire se chevauchent.

8. Appareil selon la revendication 6 ou 7,
**caractérisé en ce que** la première source de tension auxiliaire est plus petite en puissance que la seconde source de tension auxiliaire de sorte que, lorsque la première source de tension auxiliaire fonctionne, le ventilateur de refroidissement du convertisseur de fréquence ne tourne pas.

9. Appareil selon l'une quelconque des revendications 6, 7 ou 8,
**caractérisé en ce que**
le convertisseur de fréquence comprend deux sources de tension auxiliaires (PS1, PS2), formant des tensions de fonctionnement à partir du circuit intermédiaire, lesquelles sources sont conçues pour former des tensions de fonctionnement (U1, U2) pour les unités de commande,
dans lequel chaque source de tension auxiliaire possède sa propre unité de commande (CU1, CU2) correspondante, lesquelles unités de commande sont conçues pour former des signaux de commande (G₁₁, G₁₂), qui sont conçus pour être combinés dans le circuit OU en signaux de commande (G₁) finaux des semi-conducteurs de puissance (V₁) de l'onduleur.

10. Appareil selon la revendication 9,
**caractérisé en ce que** le circuit OU est conçu pour recevoir sa tension de fonctionnement par le biais d'un sélecteur (SEL) à diode de sorte que, pour former le signal de sortie, il suffise que l'une ou l'autre des sources de tension auxiliaires (PS1, PS2) soit en fonctionnement.

11. Appareil selon l'une quelconque des revendications 6 à 10,
**caractérisé en ce que**, lorsque la plage de tension d'entrée nominale du convertisseur de puissance est de 400 à 500 Vca,
la seconde source de tension auxiliaire est configurée pour fonctionner au moins dans la plage de tension de 200 à 1 100 Vcc, par ex. dans la plage de 300 à 1 000 Vcc, et
la première source de tension auxiliaire est configurée pour fonctionner au moins dans la plage de tension de 10 à 500 Vcc, par ex. dans la plage de 20 à 400 Vcc.

12. Appareil selon l'une quelconque des revendications 6 à 11,
**caractérisé en ce qu'**une batterie (B) peut être connectée à l'aide d'un commutateur au circuit de tension intermédiaire du convertisseur de fréquence, pour un fonctionnement en situation d'urgence.

13. Appareil selon la revendication 12,
**caractérisé en ce que** l'appareil comprend un commutateur bipolaire (S_{B}) pour la connexion d'une batterie au circuit de tension intermédiaire, et **en ce que** l'appareil comprend une diode (V_{B}), qui évite une surcharge de la batterie, si le réseau d'alimentation (L₁, L₂, L₃) est connecté au convertisseur de fréquence simultanément avec la batterie.

14. Convertisseur de fréquence, comprenant un redresseur (REC) connecté à la tension d'entrée, un onduleur triphasé (INU) doté de commutateurs à semi-conducteurs pouvant être commandés, un circuit de tension intermédiaire entre ceux-ci et également un système de commande,
**caractérisé en ce que** le convertisseur de fréquence comprend au moins un appareil selon l'une quelconque des revendications 6 à 13 pour le commander.
